# EUROPÄISCHE PATENTSCHRIFT

(11) **EP 0 885 712 B1**
(45) Veröffentlichungstag und Bekanntmachung des Hinweises auf die Patenterteilung: **03.01.2001**
(21) Anmeldenummer: 98105462.0
(22) Anmeldetag: 26.03.1998
(51) Int. Cl.: B29C 47/70, B29C 47/68

(54) **Verteilerweiche für eine kunststoff-verarbeitende Anlage**
Flow divider for plastic processing apparatus
Diviseur d'écoulement pour machine de transformation de matière plastique

(30) Priorität: 21.06.1997 DE 19726463
(43) Veröffentlichungstag der Anmeldung: 23.12.1998
(73) Patentinhaber: Kreyenborg Verwaltungen und Beteiligungen GmbH & Co. KG, 48157 Münster (DE)
(72) Erfinder: Hülsmann, Frank, 48356 Nordwalde (DE); Frisch, Andreas, 48161 Münster (DE)
(74) Vertreter: Habbel, Hans-Georg, Dipl.-Ing.

(56) Entgegenhaltungen:
- WO-A-96/29186
- DE-A- 3 411 669
- DE-C- 4 130 002
- US-A- 3 243 849
- US-A- 4 202 659

## Beschreibung

Die Erfindung betrifft eine Verteilerweiche nach dem Oberbegriff des Anspruches 1 .

Eine derartige Verteilerweiche ist aus der gattungsbildenden DE 41 30 002 C1 bekannt. Mit der bekannten Verteilerweiche ist es vorteilhaft möglich, wahlweise einen von zwei Auslaßkanälen des Gehäuses mit dem Einlaßkanal zu verbinden, so daß in einer kunststoffverarbeitenden Anlage beispielsweise Material von einem Extruder in die Verteilerweiche gefördert und von dort an wahlweise eine von zwei Düsen verteilt werden kann, so daß wahlweise eine von zwei nachgeschalteten Strangpreßeinrichtungen oder Spritzgießmaschinen betrieben werden kann.

In der DE 34 11 669 A1 wird ein Filtersystem für das kontinuierliche Filtern eines Polymerstromes beschrieben, wobei dieses Filtersystem mit einem drehbaren Ventilbolzen arbeitet. Dieser drehbare Ventilbolzen bedingt zwei schwerwiegende Nachteile. Einmal weist die Konstruktion gemäß der DE 34 11 669 - wie dies am deutlichsten durch die Darstellung in Fig. 4 ersichtlich wird - Toträume für das fließende Polymermaterial auf, so daß diese Anordnung z. B. überhaupt nicht bei der Verarbeitung von Polyvinylchlorid eingesetzt werden kann.
Zwangsläufig sind auch spezielle Rückschlagventile erforderlich, wie sie deutlich in Fig. 1 der DE 34 11 669 dargestellt sind.

Aus der gattungsbildenden WO 96/29186 ist eine Verteilerweiche für eine kunststoffverarbeitende Anlage bekanntgeworden, bei der drei Durchgangskanäle vorgesehen sind, und zwar ein mittlerer, gabelförmiger Durchgangskanal, der den Einlaßkanal mit zwei Auslaßkanälen verbinden kann und zwei daneben angeordnete, einfache Durchlaßkanäle, die entweder den einen oder den anderen Auslaßkanal mit dem Einlaßkanal verbinden können.

Eine Verbindung derart, daß zwei benachbarte Durchgangskanäle mit ihrem zum Einlaßkanal gerichteten Ende gleichzeitig mit dem Einlaßkanal in Verbindung stehen können, ist nicht vorgesehen, so daß beispielsweise eine Vorentlüftung nicht erfolgen kann.

Der vorliegenden Erfindung liegt daher die Aufgabe zugrunde, die gattungsgemäße Verteilerweiche dahingehend zu verbessern, daß wahlweise nicht nur eine der beiden nachgeschalteten Einrichtungen mit Material versorgt werden kann, sondern wahlweise auch beide nachgeschalteten Einrichtungen und daß es möglich ist, den jeweils neu zum Einsatz kommenden Durchlaßkanal zu entlüften und vor Aufnahme seiner vollen Produktion bereits mit Kunststoff vorzufüllen.

Diese der Erfindung zugrundeliegende Aufgabe wird durch die Lehre des Hauptanspruches gelöst.

Vorteilhafte Ausgestaltungen sind in den Unteransprüchen erläutert.

Ausgehend von dem Stand der Technik sind lediglich zwei kunststoffverarbeitende Anlagen erwähnt worden. Es können jedoch auch drei oder mehr derartige Anlagen vorgesehen sein, wobei dann je nach Ausgestaltung des Steuerteiles die Durchgangskanäle wahlweise einen, mehrere oder sämtliche Anlagen mit dem Einlaßkanal verbinden bzw. vom Schmelzfluß ausschließen können.

Das Steuerteil kann als rotierende Scheibe, verschiebbare Platte o.dgl. ausgestaltet sein. Vorteilhaft kann das Steuerteil als zylindrischer, in seiner Längsrichtung beweglich gelagerter Bolzen ausgestaltet sein: der runde Querschnitt eines derartigen Bolzens gewährleistet eine zuverlässige Abdichtung gegenüber dem umliegenden Gehäuse, und es kann eine erhebliche Baulänge zur Verfügung gestellt werden, die die Anordnung der gewünschten Durchgangskanäle problemlos ermöglicht. Ggf. kann die Baulänge des Bolzens die Gehäuseabmessungen sogar übertreffen, so daß eine Vielzahl unterschiedlicher Konfigurationen von Durchgangskanälen vorgesehen sein kann.

In einer sogenannten "Anfahrstellung" kann das Steuerteil mit einem speziellen "Anfahrkanal" in Verbindung mit dem Einlaßkanal stehen. Bei Inbetriebnahme der Gesamtanlage, wenn frische Schmelze in die Verteilerweiche gelangt, kann das erste Material durch den Anfahrkanal abgeführt werden, ohne in eine nachgeschaltete Anlage zu gelangen, da dieses erste Material nicht verwendbar ist. Der Anfahrkanal kann direkt durch das Steuerteil ins Freie führen oder als spezieller Kanal im Gehäuse ausgestaltet sein, der nicht wie die übrigen Auslaßkanäle zu einer nachgeschalteten Anlage führt, sondern ins Freie.

Besonders vorteilhaft kann ein kontinuierlich durchlaufender Betrieb einer momentan im Betrieb befindlichen Anlage beim Zuschalten einer bislang stillstehenden Anlage ohne Unterbrechung des Schmelzflusses ermöglicht werden. Hierzu sind drei Maßnahmen vorgesehen:
1. Erstens sollen die Durchgangskanäle im Steuerteil so ausgestaltet sein, daß wahlweise zwei Durchgangskanäle gemeinsam vom Einlaßkanal des Gehäuses mit Material versorgt werden können. Auf diese Weise kann je nach Stellung des Steuerteiles wahlweise nur einer oder beide Durchgangskanäle genutzt werden.
   Eine derartige Ausgestaltung ist beispielsweise möglich, in dem die beiden Durchgangskanäle an ihren zum Einlaßkanal gerichteten Enden einen Abstand zueinander aufweisen, der geringer ist als die Querschnittsabmessung des Einlaßkanals an seinem dem Steuerteil benachbarten Ende. Bei einem größeren Abstand der eigentlichen Durchgangskanäle zueinander können Verbindungsbohrungen, Nuten o. dgl. vorgesehen sein, die den gleichzeitigen Schmelzfluß vom Einlaßkanal zu zwei Durchgangskanälen ermöglichen.
2. Zweitens kann ein nicht genutzter Durchgangskanal gereinigt werden, so daß sich, wenn dieser Durchgangskanal wieder genutzt werden soll und eine Verbindung zwischen Einlaßund Auslaßkanälen des Gehäuses schaffen soll, kein unbrauchbares, gealtertes Kunststoffmaterial in diesem Durchgangskanal befindet.
   Zu diesem Zweck weist das Gehäuse Deckel auf, die entfernt oder geöffnet werden können, so daß der Zugang zu den außer Betrieb befindlichen Durchgangskanälen ermöglicht wird und diese gereinigt werden können.
   Diese Deckel können vorteilhaft auch dann vorgesehen sein, wenn eine unterbrechungsfreie Produktionsweise der nachgeschalteten Anlagen nicht vorgesehen ist, da sie die Wartung und Reinigung des Steuerteils erleichtern.
3. Drittens ist eine Entlüftung der Durchgangskanäle vorgesehen. Auf diese Weise wird das "Anfahren", also die Inbetriebnahme eines zunächst nicht genutzten Durchgangskanals, ermöglicht: Das Kunststoffmaterial gelangt bei entsprechender Stellung des Steuerbauteils vom Einlaßkanal sowohl in den nach wie vor genutzten Durchgangskanal als auch in den bislang ungenutzten und gereinigten, also leeren Durchgangskanal.
   Die Luft in diesem Durchgangskanal wird verdrängt und kann durch die Entlüftungsnut entweichen, bis der Durchgangskanal völlig von Luft befreit ist und ausschließlich mit frischem, verwendbaren Kunststoffmaterial befüllt ist.

Durch diese drei Maßnahmen kann sichergestellt werden, daß ohne Unterbrechung einer momentan betriebenen Anlage eine zweite Anlage, die der Verteilerweiche nachgeschaltet ist, wahlweise abgeschaltet oder wieder in Betrieb genommen werden kann.

Ein Ausführungsbeispiel der Erfindung wird anhand der Zeichnungen im folgenden näher erläutert. Dabei zeigt
- Fig. 1: einen Horizontalschnitt durch eine Verteilerweiche,
- Fig. 2: einen Vertikalschnitt durch die Weiche von Fig. 1,
- Fig. 3: einen Vertikalschnitt ähnlich Fig. 2, wobei sich das Steuerteil in einer anderen Stellung befindet,
- Fig. 4: einen Vertikalschnitt ähnlich Fig. 2 und 3, jedoch in einer dritten Stellung des Steuerteiles,
- Fig. 5: eine Draufsicht auf die Verteilerweiche mit einem Querschnitt durch das Steuerteil, und
- Fig. 6: eine Seitenansicht auf die Verteilerweiche.

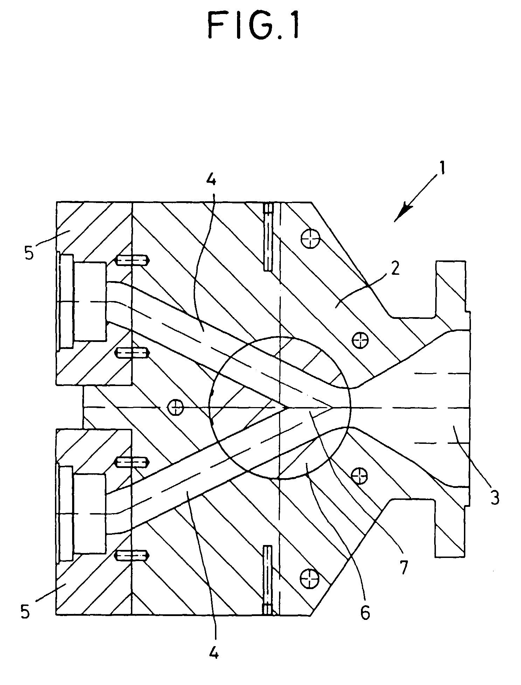

In Fig. 1 ist eine Verteilerweiche insgesamt mit 1 bezeichnet, die ein Gehäuse 2 aufweist, welches einen Einlaßkanal 3 umfaßt. Die Verteilerweiche 1 kann beispielsweise in einer Anlage vorgesehen sein, in der thermoplastischer Kunststoff verarbeitet wird, wobei dieser erhitzte und verflüssigte Kunststoff von einem Extruder in den Einlaßkanal 3 gelangt. Gegenüberliegend weist das Gehäuse 2 zwei Auslaßkanäle 4 auf, die zu Adapterstücken 5 führen, wobei an die Adapterstücke 5 beispielsweise Düsen einer Strangpreßeinrichtung angeschlossen werden können.

Zwischen dem Einlaßkanal 3 und den Auslaßkanälen 4 ist ein Steuerteil 6 angeordnet, welches als zylinderförmiger Bolzen ausgestaltet ist und mehrere Durchgangskanäle aufweist, wobei in Fig. 1 ein Y-förmig sich gabelnder Durchgangskanal 7 ersichtlich ist.

Die angeschlossenen Anlagenkomponenten, wie Extruder einerseits und Spritzdüsen andererseits, sind rein beispielhaft genannt, wobei die Verteilerweiche 1 in auch ganz unterschiedlich ausgestalteten Anlagen zur Verarbeitung von Thermoplasten oder Elastomeren Verwendung finden kann. Ebenso rein beispielhaft sind lediglich zwei nachgeschaltete Anlagenkomponenten vorgesehen und demzufolge lediglich drei Durchgangskanäle im Steuerteil. Für die rein beispielhaft genannte Anlage stellt die Anordnung der Verteilerweiche 1 gemäß Fig. 1 die Normalstellung dar, in der beide Strangpreßeinrichtungen gleichermaßen mit Kunststoffmaterial beschickt werden.

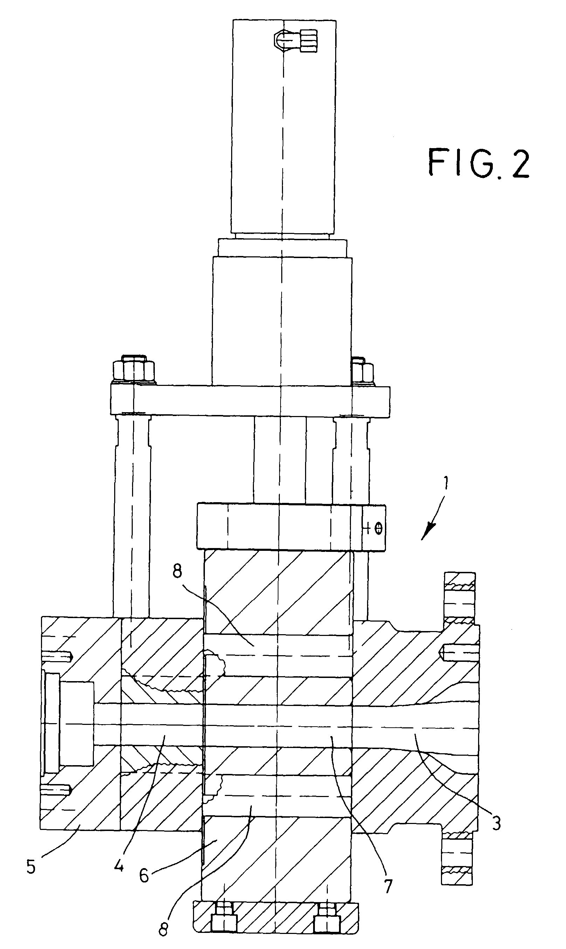

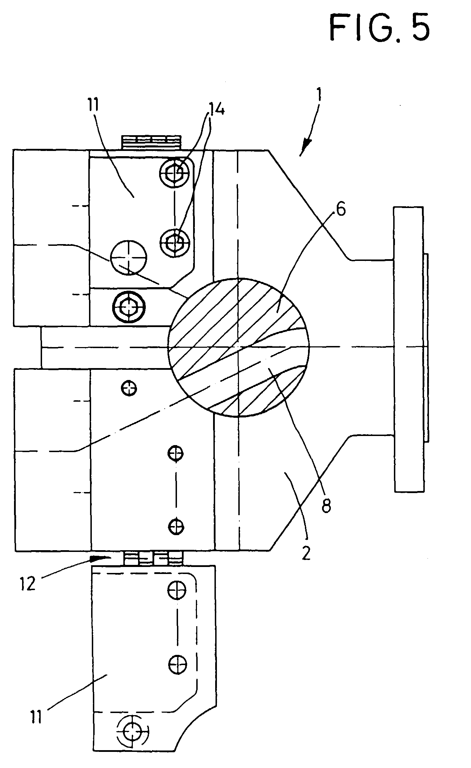

Aus Fig. 2 ist die Ausgestaltung des Steuerteiles 6 als länglicher Bolzen erkennbar, wobei der sich gabelnde Durchgangskanal 7 als mittlerer von insgesamt drei Durchgangskanälen ausgestaltet ist. Über und unter dem Durchgangskanal 7 ist jeweils ein Durchgangskanal 8 angeordnet, die beide bei entsprechender Stellung des Steuerteils 6 eine Verbindung vom Einlaßkanal 3 zu jeweils nur einem der beiden Auslaßkanäle 4 schaffen und die dementsprechend gebogen oder abgewinkelt durch das Steuerteil 6 verlaufen, wie insbesondere aus Fig. 5 ersichtlich ist.

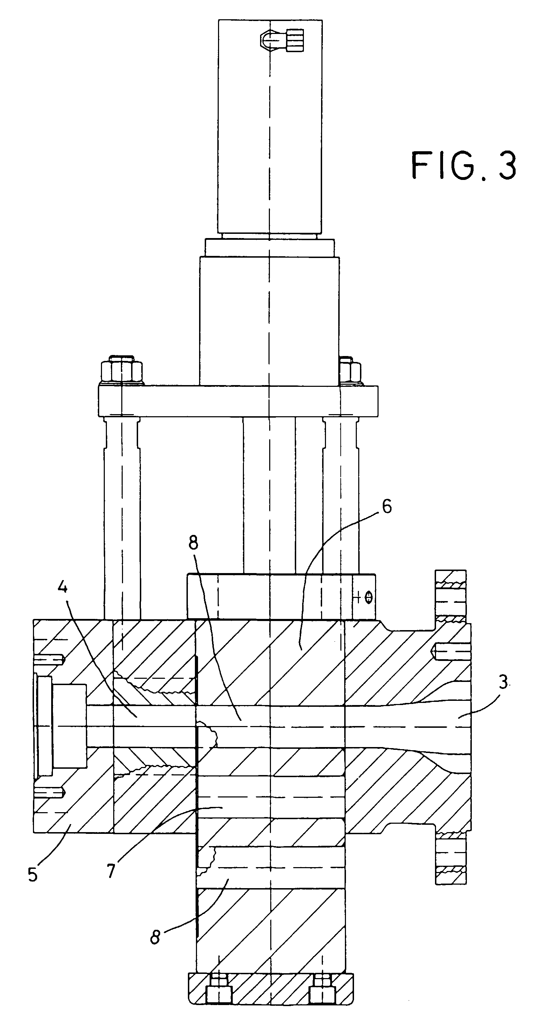

Fig. 3 zeigt in einer Darstellung ähnlich Fig. 2 eine andere Stellung des Steuerteiles 6: Der Bolzen ist gegenüber Fig. 2 nach unten verschoben, so daß der obere Durchgangskanal 8 die Verbindung zwischen dem Einlaßkanal 3 und einem der beiden Auslaßkanäle 4 schafft, während sowohl der mittlere Durchgangskanal 7 als auch der untere Durchgangskanal 8 nicht mit Kunststoffmaterial vom Einlaßkanal 3 beschickt werden. In dieser Stellung ist der Materialfluß zu dem zweiten Auslaßkanal 4 unterbrochen, so daß hier das Werkzeug gewechselt, die Düse gereinigt oder ähnliche Arbeiten durchgeführt werden können.

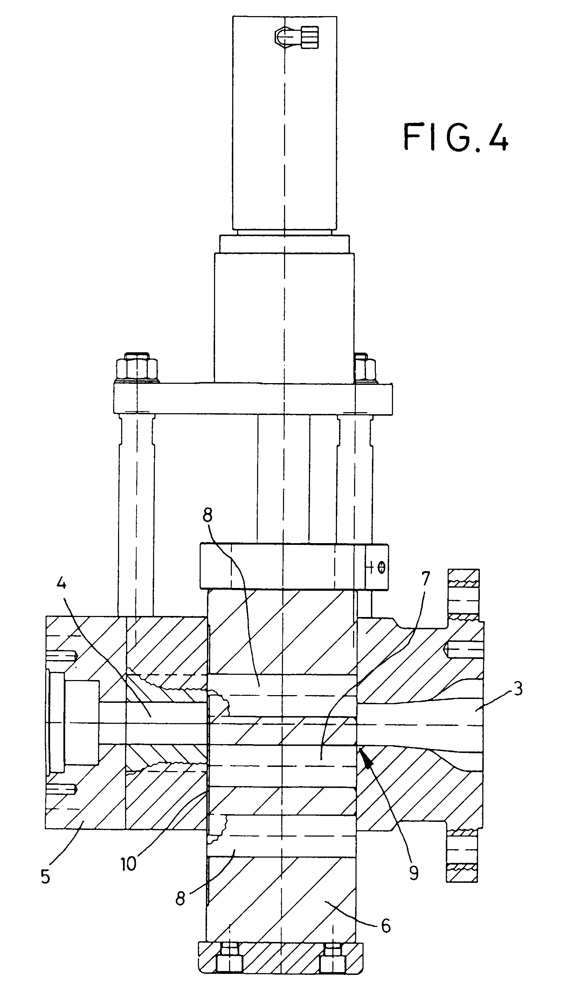

In Fig. 4 ist eine Zwischenstellung des Steuerteiles 6 dargestellt. Zum Einlaßkanal 3 hin sind die Enden der Durchlaßkanäle 7 und 8 dadurch erweitert, daß die die Durchgangskanäle 7 und 8 voneinander trennenden Bereiche des Steuerteiles 6 angefast sind. Während der frei durchgängige Kanalquerschnitt zwischen dem Einlaßkanal 3 und dem oberen Durchgangskanal 8 vergleichsweise groß ist, schafft die Fase einen vergleichsweise kleinen Durchtrittsquerschnitt 9, durch den Kunststoffmaterial aus dem Einlaßkanal 3 in den mittleren Durchgangskanal 7 gelangen kann.

Bei der Bewegung des Steuerteiles 6 aus seiner in Fig. 3 dargestellten Stellung in die Zwischenstellung gemäß Fig. 4 kann daher der leere, mittlere Durchgangskanal 7 mit Kunststoff befüllt werden. Dabei kann die im Durchgangskanal 7 vorhandene Luft durch eine Entlüftungsnut 10 nach außen entweichen. Gegebenenfalls wird zunächst ein Kunststoff- und Luftgemisch aus der Entlüftungsnut 10 austreten, jedoch ist in jedem Fall erkennbar, wann der Durchgangskanal 7 vollständig entlüftet und ausschließlich mit Kunststoffmaterial befüllt ist. Zu diesem Zeitpunkt kann dann das Steuerteil 6 axial verschoben werden, so daß der Durchgangskanal 7 mit seinem vollen Querschnitt die Verbindung zwischen dem Einlaß- und den Auslaßkanälen 3 bzw. 4 schafft, so daß nach den erfolgten Arbeiten an einer der beiden nachgeschalteten Anlagen diese nun wieder in Betrieb genommen werden kann.

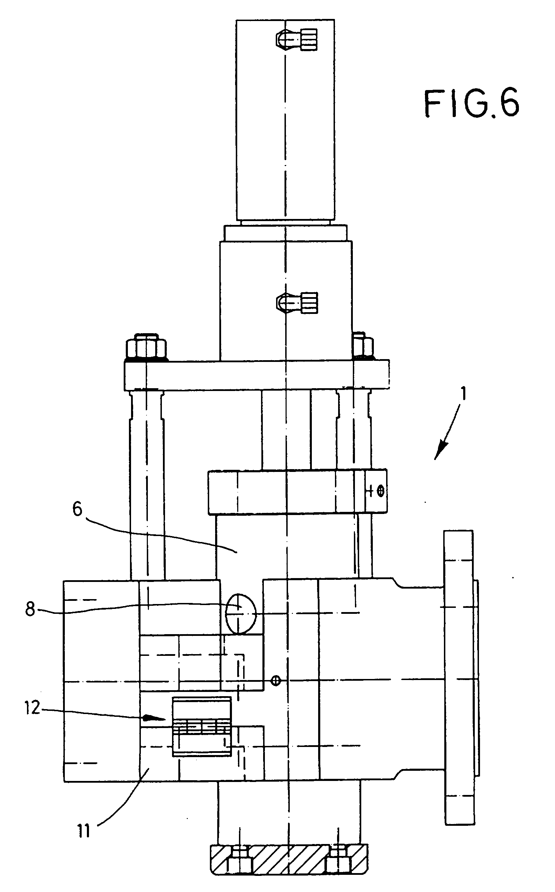

Die nicht mit dem Einlaßkanal 3 in Verbindung stehenden Durchgangskanäle 7 bzw. 8 enthalten, nachdem sie zunächst von Kunststoff durchströmt wurden, Kunststoffreste. Je nach verwendetem Material kann dieses bereits innerhalb weniger Minuten derart altern, daß es nicht mehr verarbeitet werden sollte. In diesem Fall ist der Zugang zu den nicht durchströmten Durchgangskanälen 7 bzw. 8 mit Hilfe von Deckeln 11 möglich, wie sie aus den Fig. 5 und 6 erkennbar sind: In Fig. 5 ist die Verteilerweiche 1 in der Draufsicht dargestellt, wobei ein Schnitt durch das Steuerteil 6 einen Durchgangskanal 8 zeigt, der nicht mit dem oberen Auslaßkanal 4 in Verbindung steht.

Um ggf. in diesem Durchgangskanal 8 befindliches Kunststoffmaterial zu entfernen, ist der rechte der beiden Deckel 11 um ein Scharnier 12 aufgeklappt worden. Der Zugang zum Durchgangskanal 8 ist nun frei, so daß der im Kanal befindliche Kunststoff von außen entfernt werden kann. Zu diesem Zweck kann der Kunststoff ggf. zunächst leicht abgekühlt werden, so daß er plastifiziert und als Pfropfen aus dem Durchgangskanal 8 herausgezogen werden kann. Aus Fig. 5 ist weiterhin ersichtlich, daß die Türen 11 durch jeweils drei Schrauben 14 in ihrer verschlossenen Stellung gehalten werden.

Fig. 6 zeigt die Seitenansicht zu Fig. 5, wobei das Steuerteil 6 nicht geschnitten ist. Aufgrund des um das Scharnier 12 herabgeklappten Deckels ist die nun freiliegende Austrittsöffnung des Durchgangskanales 8 erkennbar.

Abweichend vom dargestellten Ausführungsbeispiel kann ein Anfahrkanal im Steuerteil 6 oder im Gehäuse 2 vorgesehen sein, durch den nicht verwendbares Erstmaterial bei der Inbetriebnahme der Anlage abgeführt werden kann, ohne in eine der kunststoffverarbeitenden Anlagen zu gelangen.

Wenn ein unterbrechungsfreies Umschalten vom Betrieb einer Anlage auf den Betrieb beider Anlagen nicht erforderlich ist, kann unter Verzicht auf die Deckel 11 und die Entlüftungsnuten 10 die Verteilerweiche preisgünstiger ausgestaltet werden.

## Patentansprüche

1. Verteilerweiche zum Verarbeiten von thermoplastischen und elastomeren Kunststoffen, mit einem Gehäuse, und mit einem im Gehäuse quer zur Förderrichtung des in einem Verbindungskanal fließenden Kunststoffes verschiebbaren und gegenüber dem Gehäuse abgedichteten Steuerteil (6), der mehrere in seiner Bewegungsrichtung aufeinanderfolgend angeordnete Durchgangskanäle aufweist, die das Steuerteil (6) ganz durchqueren, wobei das Gehäuse als Verbindungskanal einen Einlaßkanal (3) und wenigstens zwei Auslaßkanäle (4) für den Kunststoff aufweist, die in Abhängigkeit von der Stellung des Steuerteils (6) in Verbindung mit dem Einlaßkanal (3) und einem der Auslaßkanäle (4) bringbar angeordnet sind, wobei wenigstens drei Durchgangskanäle (7, 8) vorgesehen sind, von denen zwei Durchgangskanäle (8) jeweils eine Verbindung vom Einlaßkanal (3) zu nur einem Auslaßkanal (4) schaffen und von denen der dritte Durchgangskanal (7) eine Verbindung zu wenigstens zwei Auslaßkanälen (4) schafft, dadurch gekennzeichnet, daß das Steuerteil (6) in eine Stellung bringbar ist, in der zwei benachbarte Durchgangskanäle (7 und 8) mit ihren zum Einlaßkanal (3) gerichteten Enden gleichzeitig mit dem Einlaßkanal (3) in Verbindung stehen und daß eine Entlüftungsnut (10) im Steuerteil (6) vorgesehen ist, die in der Stellung des Steuerteiles (6), in der zwei Durchgangskanäle (7, 8) mit dem Einlaßkanal (3) in Verbindung stehen, von wenigstens einem der Durchgangskanäle (7, 8) eine Verbindung zur Gehäuseaußenseite schafft.

2. Verteilerweiche nach Anspruch 1, dadurch gekennzeichnet, daß der dritte Durchgangskanal (7) zwischen den beiden anderen Durchgangskanälen (8) angeordnet ist.

3. Verteilerweiche nach Anspruch 1 oder 2, dadurch gekennzeichnet, daß der dritte Durchgangskanal (7) eine Verbindung zu sämtlichen Auslaßkanälen (4) schafft.

4. Verteilerweiche nach einem der vorhergehenden Ansprüche, dadurch gekennzeichnet, daß das Steuerteil (6) als zylindrischer Bolzen ausgestaltet und in seiner Längsrichtung beweglich gelagert ist.

5. Verteilerweiche nach einem der vorhergehenden Ansprüche, dadurch gekennzeichnet, daß im Steuerteil (6) ein zusätzlicher Kanal vorgesehen ist, der ins Freie führt oder zu einem im Gehäuse vorgesehenen Anfahrkanal, der eine Verbindung zur Gehäuseaußenseite schafft.

6. Verteilerweiche nach einem der vorhergehenden Ansprüche, dadurch gekennzeichnet, daß am Gehäuse (2) lösbare Deckel (11) vorgesehen sind, die den Zugang zu jeweils einem Durchgangskanal freigeben, der von dem Einlaßkanal (3) getrennt ist.

## Claims

1. Flow divider for processing thermoplastic and elastomeric synthetic materials, having a housing, and having a control part (6), which is displaceable in the housing transversely to the transporting direction of the synthetic material flowing in a connecting channel, is sealed off from the housing and has a plurality of through-channels which are arranged successively in its direction of movement and pass right through the control part (6), the housing having as the connecting channel an inlet channel (3) and at least two outlet channels (4) for the synthetic material, which are arranged such that they can be brought into connection with the inlet channel (3) and one of the outlet channels (4) in dependence on the position of the control part (6), at least three through-channels (7, 8) being provided, of which two through-channels (8) respectively create a connection from the inlet channel (3) to only one outlet channel (4) and of which the third through-channel (7) creates a connection to at least two outlet channels (4), characterized in that the control part (6) can be brought into a position in which two neighbouring through-channels (7 and 8) are simultaneously in connection with the inlet channel (3) by their ends directed towards the inlet channel (3) and in that a venting groove (10) is provided in the control part (6) and creates a connection to the outside of the housing in the position of the control part (6) in which two through-channels (7, 8) are in connection with the inlet channel (3), from at least one of the through-channels (7, 8).

2. Flow divider according to Claim 1, characterized in that the third through-channel (7) is arranged between the two other through-channels (8).

3. Flow divider according to Claim 1 or 2, characterized in that the third through-channel (7) creates a connection to all the outlet channels (4).

4. Flow divider according to one of the preceding claims, characterized in that the control part (6) is designed as a cylindrical bolt and is mounted movably in its longitudinal direction.

5. Flow divider according to one of the preceding claims, characterized in that in the control part (6) there is provided an additional channel, which leads into the open or to a start-up channel, which is provided in the housing and creates a connection to the outside of the housing.

6. Flow divider according to one of the preceding claims, characterized in that detachable covers (11), which allow access to a respective through-channel which is separated from the inlet channel (3), are provided on the housing (2).

## Revendications

1. Diviseur d'écoulement pour la transformation de matières thermoplastiques et élastomères, pourvu d'un logement et d'une partie directrice (6) pouvant coulisser dans le logement perpendiculairement au sens de transport du plastique circulant dans un canal de liaison et étanche vis-à-vis du logement, qui présente plusieurs canaux de passage disposés les uns à la suite des autres dans le sens de son déplacement et qui traversent complètement la partie directrice (6), le logement présentant, comme canal de liaison, un canal d'entrée (3) et au moins deux canaux de sortie (4) pour la matière plastique, qui sont disposés de façon à pouvoir établir une communication entre le canal d'entrée (3) et l'un des canaux de sortie (4) en fonction de la position de la partie directrice (6), au moins trois canaux de passage (7, 8) étant prévus, dont deux (8) créent chacun une communication du canal d'entrée (3) avec un seul canal de sortie (4) et le troisième (7) crée une communication avec au moins deux canaux de sortie (4), caractérisé en ce que la partie directrice (6) peut être amenée dans une position dans laquelle deux canaux de passage voisins (7 et 8) communiquent simultanément avec le canal d'entrée (3) par leur extrémité orientée vers le canal d'entrée (3) et en ce qu'un écrou de purge d'air (10) est prévu dans la partie directrice (6), qui crée une communication entre au moins un des canaux de passage (7, 8) et l'extérieur du logement dans la position de la partie directrice (6) dans laquelle deux canaux de passage (7, 8) communiquent avec le canal d'entrée (3).

2. Diviseur d'écoulement selon la revendication 1, caractérisé en ce que le troisième canal de passage (7) est disposé entre les deux autres canaux de passage (8).

3. Diviseur d'écoulement selon la revendication 1 ou 2, caractérisé en ce que le troisième canal de passage (7) crée une communication vers tous les canaux de sortie (4).

4. Diviseur d'écoulement selon l'une ou l'ensemble des revendications précédentes, caractérisé en ce que la partie directrice (6) est conçue comme un goujon cylindrique et est supportée de façon à se déplacer sur son axe longitudinal.

5. Diviseur d'écoulement selon l'une ou l'ensemble des revendications précédentes, caractérisé en ce qu'il est prévu dans la partie directrice (6) un canal supplémentaire débouchant à l'air libre ou dans un canal de démarrage prévu dans le logement, qui crée une communication avec l'extérieur du logement.

6. Diviseur d'écoulement selon l'une ou l'ensemble des revendications précédentes, caractérisé en ce qu'il est prévu sur le logement (2) des couvercles amovibles (11) qui libèrent l'accès au canal de passage qui est séparé du canal d'entrée (3).
